# EUROPÄISCHE PATENTANMELDUNG

(11) **EP 2 107 159 A1**
(43) Veröffentlichungstag der Anmeldung: **07.10.2009**
(21) Anmeldenummer: 09155325.5
(22) Anmeldetag: 17.03.2009
(51) Int. Cl.: D21F 1/00, D21F 7/08

(54) **Pressfilz und Verfahren zu seiner Herstellung**

(30) Priorität: 01.04.2008 DE 102008000915
(71) Anmelder: Voith Patent GmbH, 89522 Heidenheim (DE)
(72) Erfinder: Köckritz, Uwe, Dr., 89518 Heidenheim (DE); Dr. Schmitt, Matthias, 81476 München (DE)

(57) **Zusammenfassung**

Die Erfindung betrifft ein Filzband, insbesondere Pressfilz für eine Papier-, Karton-oder Tissuemaschine, mit einer Grundstruktur gebildet aus
a) einem sich auf der Breite und der Länge des Filzbandes erstreckenden Längsverstärkungsmodul (3) welches umfasst,
- ein Längsfadengelege auf der Breite und der Länge des Filzbandes, das gebildet ist aus zumindest einem sich im Wesentlichen in Längsrichtung des Bandes erstrecken Längsfaden und
- eine mit dem Längsfadengelege verbundene sich auf der Breite und der Länge des Filzbandes erstreckende Trägerlage (6)
sowie
b) einem Querverstärkungsmodul (4) gleicher Länge und Breite wie das Filzband, das auf dem Längsverstärkungsmodul (3) angeordnet und mit diesem verbundenen ist, welches
- durch eine Mehrzahl von Querverstärkungsmodulabschnitten (4a-4c) gebildet ist, die sich jeweils auf der Breite des Filzbandes und nur auf einem Teil der Länge des Filzbandes erstrecken und die in Längsrichtung des Filzbandes hintereinander liegend, sich zusammen zur Länge des Filzbandes ergänzend angeordnet sind wobei jeder Querverstärkungsmodulabschnitt eine Schar von ersten Fäden (8a-8c) und eine Schar von zweiten Fäden (9a-9c) umfasst, wobei sich die ersten und die zweiten Fäden an Fadenkreuzungsstellen kreuzen und gemeinsam ein netzartiges textiles Flächengebilde ausbilden.

## Beschreibung

Die Erfindung betrifft ein Filzband, insbesondere ein Pressfilz für eine Papier-, Karton- oder Tissuemaschine, nach dem Oberbegriff des Patentanspruchs 1 sowie Verfahren zu seiner Herstellung nach den Patentansprüchen 15 und 19.

Filzbänder, insbesondere Pressfilze für Papier-, Karton- oder Tissuemaschinen weisen in der Regel eine die Dimensionsstabilität des Filzes bereitstellende Grundstruktur auf, die beidseitig mit einer oder mehreren Faservlieslagen versehen ist.

Ziel von Entwicklungen neuer Pressfilze war in der Vergangenheit oftmals die Filzbänder durch einen modularen Aufbau einzelner Komponenten herzustellen und hierbei gewobene Strukturen zu ersetzen.

So werden bspw. in der WO89/03300 aus Modulen hergestellte Filzbänder gezeigt. Hierbei werden Module vorgeschlagen, die aus einem mit einer Faservlieslage verbunden Längsfadengelege aufgebaut sind, wie auch Module, die aus einem mit einer Faservlieslage verbunden Querfadengelege bestehen.

Zur Vereinfachung der Herstellung solcher modular aufgebauter Pressfilze wird in der EP1837440A1 des Weiteren vorgeschlagen, das die Zuglast aufnehmende Längsverstärkungsmodul aus einem mit einer Faservlieslage verbundenen Längsfadengelege in einem Wickelverfahren herzustellen und das zur Erhöhung der Querstabilität zu verwendende Querverstärkungsmodul aus mehreren sich nur auf einem Teil der Länge der Pressfilzes erstreckende Querverstärkungsmodul-abschnitten aufzubauen, die in einem ersten Fertigungsschritt ebenfalls über einen Wickelvorgang wie das Längsverstärkungsmodul hergestellt werden und die in einem nachfolgenden Fertigungsschritt auf Breite des herzustellenden Pressfilzes geschnitten und mit den Fäden quer zu dem Längsfadengelege orientiert in Längsrichtung des Filzes hintereinander liegend angeordneten werden.

Die bekannten modularen Pressfilzkonzepte bestehen hierbei aus Längsfadengelegen und aus Querfadengelegen, wobei die beiden Gelege nur über eine Faservlieslage miteinander verbunden sind. Nachteil dieser Strukturen ist hierbei, dass solche Gelege oftmals ein nur sehr begrenztes inneres Volumen im Pressfilz bereitstellen. Da sich ferner das Längs- und das Querfadengelege gegeneinander bewegen können, weichen diese beim Durchlauf durch den Pressnip einander aus, was zu einer weiteren Verringerung des inneren Hohlraumvolumens und daher zu einer Verringerung des Wasseraufnahmevermögens führen kann.

Es ist die Aufgabe der vorliegenden Erfindung Pressfilze vorzuschlagen, bei denen die oben genannten Nachteil nicht mehr auftreten und die zudem kostengünstiger als die aus dem Stand der Technik bekannten Pressfilze herzustellen sind.

Die Aufgabe wird gelöst durch ein Filzband, insbesondere Pressfilz für eine Papier-, Karton- oder Tissuemaschine, mit einer Grundstruktur, die gebildet ist aus einem sich auf der Breite und der Länge des Filzbandes erstreckenden Längsverstärkungsmodul und einem auf dem Längsverstärkungsmodul angeordneten und mit diesem verbundenen Querverstärkungsmodul, welches sich ebenfalls auf der Breite und der Länge des Filzbandes erstreckt. Bei dem erfindungsgemäßen Filzband umfasst das Längsverstärkungsmodul ein Längsfadengelege auf der Breite und der Länge des Filzbandes, das gebildet ist aus zumindest einem sich im Wesentlichen in Längsrichtung des Bandes erstrecken Längsfaden, sowie eine mit dem Längsfadengelege verbundene sich auf der Breite des Filzbandes erstreckende Trägerlage. Bei dem erfindungsgemäßen Filzband ist das Querverstärkungsmodul durch eine Mehrzahl von Querverstärkungsmodulabschnitten gebildet, die sich jeweils auf der Breite und der Länge des Filzbandes und nur auf einem Teil der Länge des Filzbandes erstrecken und die in Längsrichtung des Filzbandes hintereinander liegend angeordnet sind und sich zur länge der Filzbandes ergänzen.

Das erfindungsgemäße Filzband ist **dadurch gekennzeichnet, dass** jeder Querverstärkungsmodulabschnitt eine Schar von ersten Fäden und eine Schar von zweiten Fäden umfasst, wobei sich die ersten und die zweiten Fäden an Fadenkreuzungsstellen kreuzen und gemeinsam ein netzartiges textiles Flächengebilde ausbilden.

Bei dem erfindungsgemäßen modular aufgebauten Filzband umfasst das Querverstärkungsmodul also ein aus ersten Fäden und aus zweiten, die ersten Fäden, kreuzenden Fäden gebildetes netzartiges textiles Flächengebilde. Das netzartige textile Flächengebilde stellt hierbei im Innenraum der Maschen des Netzes ein deutlich höheres offenes Hohlraumvolumen zur Verfügung als ein herkömmliches bekanntes Querfadengelege.

Dadurch, dass sich die ersten Fäden und die zweiten Fäden bei der Ausbildung eines textilen Flächengebildes gegenseitig in Position halten, wird ein Ausweichen der Fäden der Querverstärkungslage deutlich unterbunden, wodurch das innere Hohlraumvolumen des Pressfilzes auch beim Durchlauf durch einen Pressnip aufrechterhalten werden kann.

Ferner kann das aus den ersten und zweiten Fäden bestehende netzartige textile Flächengebilde in einem Fertigungsschritt einfach bspw. als konventionelles Gewebe oder Gewirke oder Drehergewebe hergestellt werden und muss nicht wie ein Fadengelege durch eine Vlieslage fixiert werden.

Unter dem Begriff, dass sich der bzw. die Längsfäden im Wesentlichen in Längsrichtung des Bandes erstreck(t)en, soll im Sinne der vorliegenden Erfindung verstanden werden, dass der bzw. die Längsfa(ä)den des Längsfadengeleges und die Längsrichtung des Filzbandes miteinander einen Winkel von maximal 10°, insbesondere maximal 5° einschließen.

Unter einem textilen Flächengebilde ist vorliegend ein sich selbst stützendes textiles Gebilde zu verstehen, welches flächig ausgebildet ist, d.h. dessen Länge und Breite deutlich größer als dessen Höhe ist. Denkbar ist in diesem Zusammenhang, dass die Breite und Länge um mehr als den Faktor 100, insbesondere um mehr als den Faktor 1000 größer als die Höhe ist.

Vorteilhafte Ausgestaltungen und Weiterbildungen der Erfindung sind in den Unteransprüchen angegeben.

Wird das Fadengelege durch nur einen einzigen Längsfaden gebildet, so erstreckt sich dieser im Wesentlichen in der vorgesehenen Längsrichtung des Filzbandes und kann in Richtung der vorgesehenen Breite des Filzbandes wendelförmig fortschreitend bis zur vorgesehenen Breite des Filzbandes gewickelt sein. Durch das wendelförmige Wickeln des Längsfadens kann ein Längsfadengelege gebildet werden, bei dem sich jede Wicklung des Längsfadens parallel zur vorangehenden und nachfolgenden Wicklung des Längsfadens erstreckt.

Wird das Längsfadengelege aus mehreren Längsfäden, d.h. aus einer Schar von Längsfäden, gebildet, so erstrecken sich die einzelnen Längsfäden im Wesentlichen in der vorgesehenen Längsrichtung des Filzbandes und sind in Richtung der vorgesehenen Breite des Filzbandes nebeneinander angeordnet, hierbei kann die Anordnung der Längsfäden in Richtung der vorgesehenen Breite des Filzbandes wendelförmig fortschreitend bis zur vorgesehenen Breite des Filzbandes gewickelt sein. Durch das wendelförmige Wickeln der Längsfadenanordnung kann ein Längsfadengelege gebildet werden, bei dem alle Längsfäden der Anordnung stets zueinander parallel verlaufen und bei dem sich jede Wicklung eines jeden Längsfadens parallel zur vorangehenden und nachfolgenden Wicklung dieses Längsfadens erstreckt.

Nach einer weiteren Ausgestaltung der Erfindung ist vorgesehen, dass sich die ersten Fäden zueinander parallel erstrecken und/oder dass sich die zweiten Fäden zueinander parallel erstrecken.

Denkbar ist es, dass das netzartige textile Flächengebilde nur durch die ersten und die zweiten Fäden gebildet wird.

Vorzugsweise ist das Längsverstärkungsmodul als endloses Band hergestellt.

Nach einer konkreten Ausgestaltung der Erfindung ist bspw. vorgesehen, dass die Trägerlage allein oder in Kombination gebildet ist durch: eine Faservlieslage, eine Folienlage.

Eine konkrete Weiterbildung der Erfindung sieht hierbei vor, dass das Querverstärkungsmodul auf der Trägerlage des Längsverstärkungsmoduls angeordnet und mit dieser verbunden ist. In diesem Fall kann die Trägerlage bspw. entsprechend gestaltet sein, um einfach mit dem Querverstärkungsmodul verbunden werden zu können. Denkbar ist bspw. in diesem Zusammenhang, dass die Faservlieslage Schmelzklebefasern umfasst, so dass das Querverstärkungsmodul mit der Trägerlage des Längsverstärkungsmoduls durch Wärmeeinwirkung verklebt werden kann. Natürlich sind auch andere Verbindungstechniken möglich. Denkbar ist bspw., dass die Querverstärkungsmodulabschnitte mit dem Längsverstärkungsmodul verbunden sind, indem diese miteinander vernäht und/oder verschweißt sind.

Vorzugsweise ist das Längsfadengelege in die Faservlieslage eingebettet. Dies kann bspw. dadurch erreicht werden, indem das Längsfadengelege mit der als Faservlieslage ausgebildeten Trägerlage vernadelt wird. Durch den Vernadelungsprozess ist es möglich, dass die Trägerlage hierbei weitestgehend zerstört wird. Die Trägerlage kann in diesem Fall hauptsächlich die Aufgabe übernehmen, die Längsfäden des Längsfadengeleges während des weiteren Herstellungsprozesses des Filzbandes in Position zu halten.

Jeder Querverstärkungsmodulabschnitt hat hierbei zwei quer zur Längsrichtung des Filzbandes verlaufende Querränder, welche die Ausdehnung jedes Quermodulverstärkungsabschnitts in Längsrichtung des Filzbandes begrenzen. Die Querränder können hierbei gerade oder geknickt oder gekrümmt verlaufen.

Sind die Querverstärkungsmodulabschnitte nur aus den ersten und den zweiten Fäden aufgebaut, so werden die Querränder nur durch entsprechenden Zuschnitt der ersten und zweiten Fäden festgelegt und stellen die Verbindungslinie von abgeschnittenen aufeinander folgenden Fadenenden dar.

Bei dem erfindungsgemäßen Filzband setzt sich das Querverstärkungsmodul aus den in Längsrichtung des Filzbandes hintereinander liegend angeordneten Querverstärkungsmodulabschnitten zusammen. Hierbei ist es nach einer ersten Ausgestaltung möglich, dass die Querränder von zueinander benachbart angeordneten Querverstärkungsmodulabschnitten auf Stoß gelegt sind. Denkbar ist aber auch, dass sich benachbarte Querverstärkungsmodulabschnitte im Bereich der Querränder bereichsweise überlappen.

Die Querverstärkungsmodulabschnitte können so zugeschnitten sein, dass sich die Querränder senkrecht zur Längsrichtung des Filzbandes erstrecken. Es ist aber auch denkbar, dass die Querränder mit der Längsrichtung des Filzbandes einen Winkel im Bereich von 1°-89°, insbesondere im Bereich von 20°-70° einschließen. In diesem Fall verlaufen die Querränder der Querverstärkungsmodulabschnitte schräg zur Längsrichtung des Filzbandes, wodurch bspw. die Stoßkante bzw. der Überlappungsbereich von zueinander benachbarten Querverstärkungsmodulabschnitten auf einfache Art und Weise verlängert wird. Denkbar ist in diesem Zusammenhang, dass die Querränder von zueinander benachbarten Querverstärkungsmodulabschnitten miteinander verklebt und/oder verschweißt und/oder vernäht sind.

Durch die Erfindungsgemäße Lösung ist es möglich, dass das Querverstärkungsmodul sowohl eine Aussteifung des Filzbandes in Querrichtung, d.h. in Richtung der Breite des Filzbandes, als auch in Längsrichtung des Filzbandes bereitstellt. Hierzu ist es bspw. denkbar, dass die erste Fadenschar mit der zweiten Fadenschar einen Winkel im Bereich von 1° bis 90° einschließt.

Des Weiteren kann es in diesem Zusammenhang von Vorteil sein, wenn die erste Fadenschar und / oder die zweite Fadenschar mit der Längsrichtung des Bandes einen Winkel im Bereich von 1° bis 90°, insbesondere im Bereich von 45°±10° einschließt bzw. einschließen.

Denkbar ist in diesem Zusammenhang beispielsweise, dass die Schar der ersten Fäden zu der Schar der zweiten Fäden bezüglich der Längsrichtung des Bandes symmetrisch verlaufen. Beispielhaft schließen hierbei die ersten Fäden mit den zweiten Fäden einen Winkel von 90° ein, wobei die ersten und die zweiten Fäden mit der Längsrichtung des Bandes jeweils einen Winkel von 45° einschließen. Denkbar ist auch, dass die ersten und die zweiten Fäden mit der Längsrichtung des Bandes jeweils den gleichen Winkel einschließen, der ungleich 45° ist.

Um das gegenseitige in Position halten der ersten und der zweiten Fäden des netzartigen textilen Flächengebildes zu bewerkstelligen oder zu unterstützen kann es sinnvoll sein, wenn die Schar der ersten Fäden und die Schar der zweiten Fäden an den Fadenkreuzungspunkten miteinander verbunden ist. Hierdurch kann die Dimensionsstabilität des Querverstärkungsmoduls und damit des gesamten Filzbandes verbessert werden.

Eine Verbindung kann bspw. dadurch bewerkstelligt werden, indem die erste Fadenschar mit der zweiten Fadenschar an den Fadenkreuzungsstellen miteinander verklebt und/oder verschweißt ist.

Des Weiteren ist es denkbar, dass die Schar der ersten Fäden mit der Schar der zweiten Fäden an den Fadenkreuzungsstellen miteinander verbunden ist, indem die Anordnung aus ersten und zweiten Fäden zumindest an den Fadenkreuzungsstellen mit einer Beschichtung überzogen ist.

Zusätzlich oder alternativ ist es denkbar, dass die erste Fadenschar an den Fadenkreuzungspunkten durch zumindest einen Nähfaden an die zweite Fadenschar geheftet ist. Im letzt genannten Fall können die Querverstärkungsmodulabschnitte bspw. durch ein Drehergewebe oder ein Gewirke, insbesondere Kettengewirke, gebildet werden.

Die das netzartige textile Flächengebilde bildenden ersten und zweiten Fäden können sich aber auch dadurch gegenseitig in Position halten, indem die erste Fadenschar mit der zweiten Fadenschar verwoben ist. Das Verweben kann hierbei auch alternativ oder zusätzlich zum Verkleben und/oder Verschmelzen der Fäden an den Fadenkreuzungspunkten erfolgen.

Die Bildung des netzartigen textilen Flächengebildes durch Verkleben und/oder Verschweißen und/oder Verbindung mittels eines zusätzlichen Nähfadens hat gegenüber einem herkömmlichen Gewebe den Vorteil, dass die ersten und die zweiten Fäden nicht gekrümmt verlaufen. Dies bedeutet, dass zur Bildung des netzartigen textilen Flächengebildes pro Flächeneinheit weniger Fadenmaterial notwendig ist, welches bei Druckbelastung im Pressnip ausweichen muss und hierbei die Öffnungen des netzartigen textilen Flächengebildes verschließen kann. Dies bedeutet, dass bspw. bei Verbindung der ersten und zweiten Fäden mittels eines Nähfadens gegenüber einem konventionellen Gewebe bei Durchlauf durch einen Pressnip das innere Hohlraumvolumen des Filzbandes besser aufrechterhalten werden kann. Dies bedingt eine deutlich verbesserte Entwässerungsleistung eines derart gebildeten Filzbandes.

Um die Markierungsneigung zu reduzieren kann es sinnvoll sein, wenn die Fäden der ersten und / oder zweiten Fadenschar als flache Fäden ausgebildet sind. Eine Verringerung der Markierungsneigung folgt auch deshalb, da sich die Presskraft im Pressnip auf eine größere Fadenfläche verteilt und somit ein "Durchschlagen" der ersten und/oder zweiten Fäden auf die Papierseite des Filzbandes beim Durchlauf durch den Pressnip gedämpft oder verhindert wird.

Unter flachen Fäden sollen vorliegend Fäden verstanden werden, die im Querschnitt eine geringere maximale Höhe als maximale Breite haben. Denkbar sind in diesem Zusammenhang Fäden mit rechteckigem Querschnitt und solche mit ovalem Querschnitt.

Da der zusätzliche Nähfaden die wesentliche Funktion hat, die ersten Fäden an die zweiten Fäden zu halten und sonst zur Struktur des textilen Flächengebildes möglichst nicht beitragen soll, ist es sinnvoll, wenn der Nähfaden dünner ist als die ersten und zweiten Fäden.

Denkbar ist in diesem Zusammenhang insbesondere, dass die ersten Fäden im Wesentlichen gleich dick sind wie die zweiten Fäden.

Denkbar ist, dass die ersten Fäden, die zweiten Fäden und der zumindest eine Nähfaden Monofilamentfäden oder Multifilamentfäden sind. Handelt es sich um Multifilamentfäden, so können diese miteinander verzwirnt sein.

Versuche der Anmelderin haben gezeigt, dass das innere Hohlraumvolumen des Filzbandes insbesondere dann beim Durchlauf durch einen Pressnip zu einem hohen Maße aufrechterhalten werden kann, wenn das netzartige textile Flächengebilde eine offene Fläche im Bereich von 20% bis 95% der senkrechten Projektion der Gesamtfläche des textilen Flächengebildes hat.

Zur einfachen Handhabbarkeit der hergestellten Querverstärkungsmodulabschnitte sieht eine Ausgestaltung der Erfindung ferner vor, dass sich jeder Querverstärkungsmodulabschnitt zwischen 0,5 bis 8 Metern in Längsrichtung des Filzbandes erstreckt.

Eine konkrete Weiterbildung der Erfindung sieht vor, dass auf der zur Papierseite und/oder auf der zur Maschinenseite weisenden Seite der Grundstruktur des Filzbandes zumindest eine Faservlieslage angeordnet ist.

Nach einem zweiten Aspekt der Erfindung wird ein Verfahren zur Herstellung eines Filzbandes, insbesondere Pressfilz für eine Papiermaschine, umfassend die folgenden Schritte vorgeschlagen:
a) Bereitstellen eines sich auf der Breite und der Länge des herzustellenden Filzbandes erstreckenden Längsfadengeleges, das gebildet ist aus zumindest einem sich im Wesentlichen in Längsrichtung des Bandes erstrecken Längsfaden,
b) Bereitstellen einer sich auf der Breite und der Länge des herzustellenden Filzbandes erstreckenden Trägerlage,
c) Verbinden des Längsfadengeleges mit der Trägerlage zur Ausbildung eines Längsverstärkungsmoduls,
d) Bereitstellen einer Mehrzahl von flächenförmigen Querverstärkungsmodulabschnitten, deren Erstreckung in einer Richtung zumindest der Breite des herzustellenden Filzbandes und in einer dazu senkrechten Richtung nur einem Teil der Länge des herzustellenden Filzbandes entspricht und Anordnen der Querverstärkungsmodulabschnitte auf dem Längsverstärkungsmodul, insbesondere auf der Trägerlage des Längsverstärkungsmoduls, so dass sich die Querverstärkungsmodulabschnitte jeweils auf der Breite des Filzbandes und nur auf einem Teil der Länge des Filzbandes erstrecken und in Längsrichtung des Filzbandes hintereinander liegend angeordnet sind und sich zusammen zur Länge des Filzbandes ergängen,
e) Verbinden der Querverstärkungsmodulabschnitte mit dem Längsverstärkungsmodul oder der Trägerlage.

Das erfindungsgemäße Verfahren ist **dadurch gekennzeichnet, dass** jeder bereitgestellte Querverstärkungsmodulabschnitt eine Schar von ersten Fäden und eine Schar von zweiten Fäden umfasst, welche die ersten Fäden kreuzen und gemeinsam mit diesen ein netzartiges textiles Flächengebilde ausbilden.

Vorzugsweise werden die Querverstärkungsmodulabschnitte an Stoßstellen oder im Überlappungsbereich miteinander verbunden.

Zu bemerken ist, dass die Verfahrensschritte nicht notwendigerweise in der oben angegebenen Reihenfolge durchgeführt werden müssen. Denkbar ist bspw., dass die Schritte d) und e) vor dem Schritt c) durchgeführt werden. In diesem Fall können bspw. zuerst die Querverstärkungsmodulabschnitte mit der Trägerlage verbunden werden, bevor die so hergestellte Anordnung mit dem Längsfadengelege verbunden wird. Das Querverstärkungsmodul kann in diesem Fall als Rollenware bereitgestellt werden.

Denkbar ist in diesem Zusammenhang auch, dass bei Schritt d) die Querverstärkungsmodulabschnitte zur Ausbildung des sich auf der Länge und der Breite des Filzbandes erstreckenden Querverstärkungsmoduls zuerst miteinander verbunden werden, bevor das so geschaffene Querverstärkungsmodul auf dem Längsverstärkungsmodul bzw. auf der Trägerlage angeordnet wird.

Nach einer besonders bevorzugten Ausgestaltung der Erfindung ist vorgesehen, dass das Bereitstellen der Mehrzahl von Querverstärkungsmodulabschnitten und deren Anordnen auf dem Längsverstärkungsmodul umfasst:
da) das Bereitstellen einer Querverstärkungsmodulausgangsbahn mit einer Breite und einer Länge,
db) seitliches Zuführen der Querverstärkungsmodulausgangsbahn zum Längsverstärkungsmodul, und
dc) flächiges Ablegen der zugeführten Querverstärkungsmodulausgangsbahn auf dem Längsverstärkungsmodul,
dd) Trennen des auf dem Längsverstärkungsmodul abgelegten Abschnitts der Querverstärkungsmodulausgangsbahn von der übrigen Querverstärkungsmodulausgangsbahn zur Ausbildung eines Querverstärkungsmodulabschnitts,
de) Bewegen des Längsverstärkungsmoduls in seiner Längsrichtung relativ zur Querverstärkungsmodulausgangsbahn auf einer Strecke, die im Wesentlichen der Breite der Querverstärkungsmodulausgangsbahn entspricht,
df) Wiederholen der Schritte db) bis de) so dass die Querverstärkungsmodulabschnitte in Längsrichtung des Filzbandes hintereinander liegend angeordnet sind.

Bei der seitlichen Zuführung der Querverstärkungsmodulausgangsbahn zum Längsverstärkungsmodul wird das freie Ende der Querverstärkungsmodulausgangsbahn von einer Längskante des Längsverstärkungsmoduls in Richtung der anderen Längskante, insbesondere bis zur anderen Längskante, des Längsverstärkungsmoduls bewegt.

Durch die Bewegung des Längsverstärkungsmoduls in seiner Längsrichtung relativ zur Querverstärkungsmodulausgangsbahn wird ein noch nicht mit einem Querverstärkungsmodulabschnitt bedeckter Bereich des Längsverstärkungsmoduls freigegeben, auf dem ein anderer Querverstärkungsmodulabschnitt abgelegt werden kann.

Dies kann bspw. dadurch geschehen, indem sich das freie Ende der Querverstärkungsmodulausgangsbahn entlang einer Richtung bewegt, die in der Ebene des Längsverstärkungsmoduls oder einer dazu parallelen Ebene und quer zur Längsrichtung des Längsverstärkungsmoduls verläuft.

In diesem Zusammenhang ist es insbesondere von Vorteil, wenn die Querverstärkungsmodulausgangsbahn als Rollenware vorliegt. Denkbar ist ferner, dass die Schritte db) und dc) gleichzeitig oder nacheinander durchgeführt werden.

Von Vorteil ist des Weiteren, wenn die Querverstärkungsmodulausgangsbahn so weit auf das Längsverstärkungsmodul geführt wird, dass der auf dem Längsverstärkungsmodul abgelegte Teil der Querverstärkungsmodulausgangsbahn sich auf der Breite des Längsverstärkungsmoduls erstreckt.

Das Längsfadengelege kann bspw. dadurch hergestellt werden, indem ein einziger sich im Wesentlichen in der vorgesehenen Längsrichtung des Filzbandes erstreckender Längsfaden in Richtung der vorgesehenen Breite des Filzbandes wendelförmig fortschreitend bis zur vorgesehenen Breite des Filzbandes gewickelt wird.

Das Längsfadengelege kann bspw. auch dadurch hergestellt werden, indem mehrere sich im Wesentlichen in der vorgesehenen Längsrichtung des Filzbandes erstreckende Längsfäden nur auf einem Teil der vorgesehenen Breite des Filzbandes nebeneinander angeordnet werden und die Anordnung der Fäden in Richtung der vorgesehenen Breite des Filzbandes wendelförmig fortschreitend bis zur vorgesehenen Breite des Filzbandes gewickelt wird.

Das wendelförmige Wickeln des oder der Längsfa(ä)den kann bspw., dadurch geschehen, indem der oder die Längsfa(ä)den um zwei zueinander beabstandete und zueinander parallel ausgerichtete Rollen gewickelt wird bzw. werden.

Ferner kann die Trägerlage dadurch hergestellt werden, indem eine sich nur auf einem Teil der vorgesehenen Gesamtbreite des Filzbandes erstreckende Trägerbahn in Richtung der vorgesehenen Breite des Filzbandes wendelförmig fortschreitend bis zur vorgesehenen Gesamtbreite des Filzbandes gewickelt wird. Hierbei ist es denkbar, dass beim wendelförmigen Wickeln zueinander weisende Ränder der Trägerbahn auf Stoß oder sich bereichsweise überlappend gelegt werden.

Nach einem weiteren Aspekt der Erfindung wird ein weiteres Verfahren zur Herstellung eines Filzbandes, insbesondere eines Filzbandes nach einem der Ansprüche 1-14, umfassend die folgenden Schritte vorgeschlagen:
a) Bereitstellen eines bahnförmigen Längsverstärkungsmoduls mit einer Länge und einer Breite,
b) Bereitstellen eines Querverstärkungsmodulausgangsbahn mit einer Länge und einer Breite,
c) seitliches Zuführen der Querverstärkungsmodulausgangsbahn zum Längsverstärkungsmodul, und
d) flächiges Ablegen der zugeführten Querverstärkungsmodulausgangsbahn auf dem Längsverstärkungsmodul,
e) Trennen des auf dem Längsverstärkungsmodul abgelegten Abschnitts der Querverstärkungsmodulausgangsbahn von der übrigen Querverstärkungsmodulausgangsbahn zur Ausbildung eines Querverstärkungsmodulabschnitts,
f) Bewegen des Längsverstärkungsmoduls in seiner Längsrichtung relativ zur Querverstärkungsmodulausgangsbahn auf einer Strecke, die im Wesentlichen der Breite der Querverstärkungsmodulausgangsbahn entspricht,
g) Wiederholen der Schritte c) bis f) so dass die Querverstärkungsmodulabschnitte in Längsrichtung des Filzbandes hintereinander liegend angeordnet sind.

Mit dem erfindungsgemäßen Verfahren ist es einfach möglich, das Querverstärkungsmodul aus einer als Rollenware gelieferten Bahn herzustellen. Hierdurch kann das aufwändige Konfektionieren einzelner Quermodulverstärkungsabschnitte entfallen. Das erfindungsgemäße Verfahren nach diesem Aspekt ist insbesondere dann von Vorteil, wenn als Querverstärkungsmodul ein aus ersten und zweiten sich gegenseitig kreuzenden Fäden hergestelltes netzartiges textiles Flächengebilde verwendet wird, da solche textilen Flächengebilde als Rollenware konfektionierte Massenware zugekauft werden können.

Zu bemerken ist, dass das Verfahren nach Anspruch 32 auch mit Verfahrensschritten kombiniert werden kann, wie diese in den Ansprüchen 26 und 28 beschrieben sind.

Das Verfahren wird insbesondere so durchgeführt, dass sich bei der fertig gestellten Grundstruktur jeder der auf dem Längsverstärkungsmodul abgelegten Querverstärkungsmodulabschnitte auf der Breite des Längsverstärkungsmoduls erstreckt und dass sich die hintereinander liegend angeordneten Querverstärkungsmodulabschnitte zusammen zur Länge des Längsverstärkungs-moduls ergänzen.

Bei beiden vorgeschlagenen erfindungsgemäßen Verfahren werden die auf dem Längsverstärkungsmodul abgelegten Querverstärkungsmodulabschnitte mit dem Längsverstärkungsmodul verbunden.

Die Verbindung der Querverstärkungsmodulabschnitte mit dem Längsverstärkungsmodul kann bspw. umfassen, dass das Längsverstärkungsmodul und die auf diesem angeordneten Querverstärkungsmodulabschnitte gemeinsam einer Wärmeeinwirkung unterzogen werden. Hierzu ist es denkbar, dass das Längsverstärkungsmodul und die auf diesem angeordneten Querverstärkungsmodulabschnitte zur Wärmeeinwirkung gemeinsam um eine beheizte Walze geführt werden.

Die Erfindung wird nachfolgend anhand von schematischen nicht maßstäblichen Zeichnungen näher erläutert. Es zeigen:
- Figur 1: ein erfindungsgemäßes Filzband im Schnitt entlang seiner Längsrichtung;
- Figur 2: in Draufsicht das Querverstärkungsmodul des Filzbandes der Figur 1;
- Figur 3: einen Querverstärkungsmodulabschnitt des Querverstärkungsmoduls der Figuren 1 und 2 in perspektivischer Darstellung;
- Figur 4: Schritte eines erfindungsgemäßen Verfahrens zur Herstellung eines Filzbandes,
- Figur 5: Schritte eines alternativen erfindungsgemäßen Verfahrens zur Herstellung eines Filzbandes.

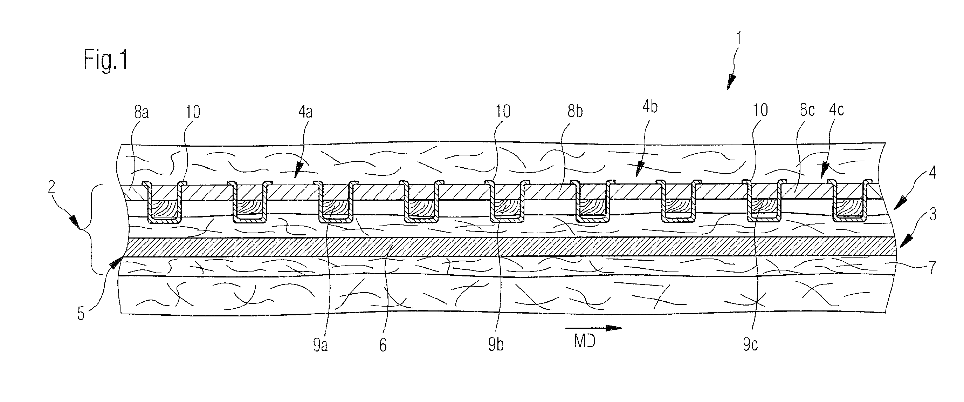

Die Figur 1 zeigt ein erfindungsgemäßes Filzband 1 im Schnitt entlang seiner Längsrichtung. Anzumerken ist hierbei, dass die Längsrichtung des Filzbandes 1 der Maschinenrichtung MD entspricht.

Das Filzband 1 umfasst eine Grundstruktur 2, die gebildet ist aus einem sich auf der Breite des Filzbandes erstreckenden Längsverstärkungsmodul 3 und einem sich auf der Breite des Filzbandes erstreckenden Querverstärkungsmodul 4.

Das Längsverstärkungsmodul 3 umfasst ein Längsfadengelege 5 auf der Breite des Filzbandes 1, das gebildet ist aus einer Schar von zueinander parallelen Längsfäden 6 (hiervon ist in der Figur 1 nur ein einziger Faden zu erkennen), die sich im Wesentlichen in Längsrichtung MD des Bandes 1 erstrecken und eine mit dem Längsfadengelege 5 verbundene sich auf der Breite des Filzbandes 1 erstreckende Trägerlage 6, die vorliegend als Faservlieslage 7 ausgebildet ist und in welche das Längsfadengelege 5 eingebettet ist. Die Trägerlage 6 umfasst Schmelzklebefaser.

Das Querverstärkungsmodul 4 ist auf dem Längsverstärkungsmodul 3 angeordnet und ist mit diesem durch das aufgeschmolzene und wieder erstarrte Material der Schmelzklebefasern verklebt. Somit ist vorliegend das Querverstärkungsmodul 4 auf der Trägerlage 6 des Längsverstärkungsmoduls 3 angeordnet und mit dieser verbunden.

Das Querverstärkungsmodul 4 ist durch eine Mehrzahl von Querverstärkungsmodulabschnitten 4a-4c gebildet, die sich jeweils auf der Breite des Filzbandes 1 und nur auf einem Teil der Länge des Filzbandes 1 erstrecken und die in Längsrichtung MD des Filzbandes 1 hintereinander liegend angeordnet sind.

Erfindungsgemäß ist jeder Querverstärkungsmodulabschnitt 4a-4c gebildet aus einer Schar von zueinander parallelen ersten Fäden 8a-8c und einer Schar von zueinander parallelen zweiten Fäden 9a-9c, welche die ersten Fäden 8a-8c kreuzen, so dass jeder Querverstärkungsmodulabschnitt 4a-4c ein netzartiges textiles Flächengebilde ausbildet. Vorliegend erstrecken sich die ersten Fäden 8a-8c in Längsrichtung des Filzbandes 1 und die zweiten Fäden 9a-9c unter einem Winkel von 90° dazu.

Wie aus der Darstellung der Figur 1 zu entnehmen ist, sind die ersten Fäden 8a-8c und die zweiten Fäden 9a-9c als flache Fäden ausgebildet.

Bei jedem Querverstärkunsmodulabschnitt 4a-4c ist die Schar von ersten Fäden 8a-8c mit der Schar von zweiten Fäden 9a-9c an den Fadenkreuzungspunkten durch Nähfäden 10 miteinander verbunden. Hierbei sind die Nähfäden 10 im Querschnitt dünner als die ersten Fäden 8a-8c und die zweiten Fäden 9a-9c.

Des Weiteren haben die ersten Fäden 8a-8c einen im Wesentlichen gleich dicken Querschnitt wie die zweiten Fäden 9a-9c. Die ersten und zweiten Fäden sind Monofilamentfäden. Die Nähfäden 10 sind vorliegend Multifilamentfäden.

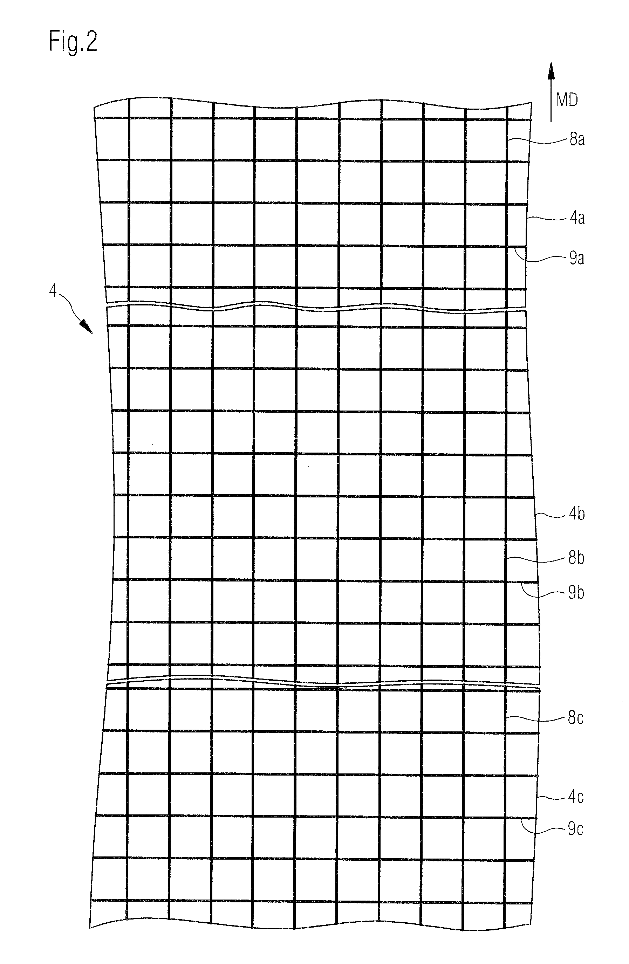

Die Figur 2 zeigt in Draufsicht das Querverstärkungsmodul 4 im Bereich der drei Querverstärkungsmodulabschnitte 4a-4c. Nicht dargestellt sind in der Figur 2 die die ersten mit den zweiten Fäden verbindenden Nähfäden.

Vorliegend sind die in Längsrichtung MD hintereinander liegend angeordneten Querverstärkungsmodulabschnitte 4a-4c auf Stoß liegend angeordnet. Dies wird dadurch erreicht, indem die zueinander weisenden Enden von ersten Fäden 8a-8c nebeneinander angeordneter Querverstärkungsmodulabschnitte auf Stoß gelegt werden. Bspw. sind die ersten Fäden 8a des Querverstärkungsmodulabschnitts 4a mit den ersten Fäden 8b des Querverstärkungsmodulabschnitt 4b auf Stoß gelegt.

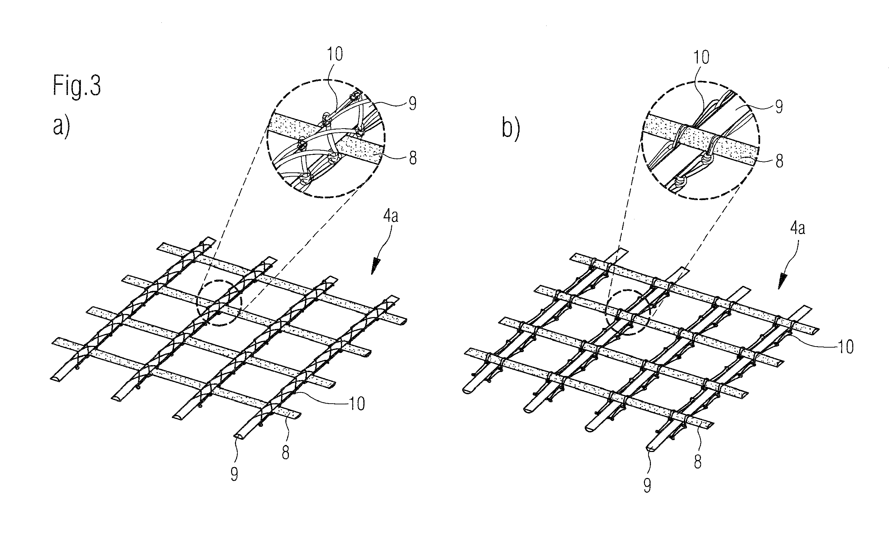

Die Figur 3 zeigt den Querverstärkungsmodulabschnitt 4a des Querverstärkungsmoduls 4 der Figuren 1 und 2 in perspektivischer Darstellung von der Oberseite her (Figur 3a) und von der Unterseite her (Figur 3b). Zu bemerken ist, dass sämtliche Querverstärkungsmodulabschnitte des Querverstärkungsmoduls 4 wie der Querverstärkungsmodulabschnitt 4a aufgebaut sind. Wie aus der Darstellung der Figur 3 zu entnehmen ist, wird der Querverstärkungsmodulabschnitt durch ein Kettengewirke gebildet, bei dem die ersten und die zweiten Fäden durch Nähfäden miteinander 10 verbunden sind. Vorliegend hat das den Querverstärkungsmodulabschnitt 4a bildende netzartige textile Flächengebilde eine offene Fläche im Bereich von 20% bis 95% der senkrechten Projektion der Gesamtfläche des textilen Flächengebildes 4a.

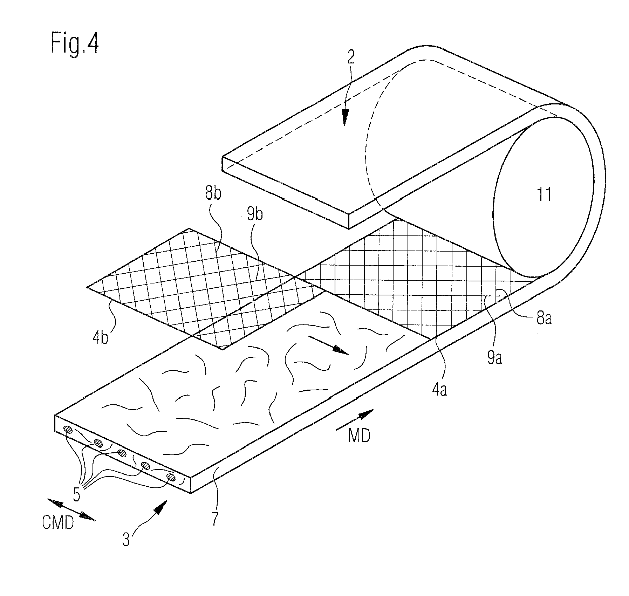

Die Figur 4 Schritte eines erfindungsgemäßen Herstellungsverfahrens.

Zu erkennen ist, das bereits hergestellte Längsverstärkungsmodul 3, welches die Faservlieslage 7 und die darin eingebetteten Längsfäden 6 umfasst.

Zu erkennen ist ein Querverstärkungsmodulabschnitt 4a der bereits auf dem Längsverstärkungsmodul 3 abgelegt ist und ein weiterer Querver-stärkungsmodulabschnitt 4b, der gerade auf dem Längsverstärkungsmodul 3 abgelegt wird. Die beiden Querverstärkungsmodulabschnitt 4a, 4b sind bereits vor deren Ablegen auf dem Längsverstärkungsmodulabschnitt 3 auf die richtige Breite, d.h. auf die Breite des Längsverstärkungsmoduls 3 zugeschnitten worden. Die Querverstärkungsmodulabschnitt 4a, 4b bilden zusammen mit weiteren nicht dargestellten Querverstärkungsmodulabschnitten auf dem Längsverstärkungsmodul 3 das Querverstärkungsmodul. Für sämtliche Querverstärkungsmodulabschnitte gilt, dass deren Erstreckung in einer Richtung zumindest der Breite des herzustellenden Filzbandes 1 und in einer dazu senkrechten Richtung nur einem Teil der Länge des herzustellenden Filzbandes 1 entspricht.

Die Querverstärkungsmodulabschnitte 4a , 4b, ...werden auf dem Längsverstärkungsmodul 3 so angeordnet, dass sich diese jeweils auf der Breite des Filzbandes 1 und nur auf einem Teil der Länge des Filzbandes 1, im Bereich zwischen 0,5m und 8m, erstrecken und dass diese in Längsrichtung MD des Filzbandes 1 hintereinander liegend angeordnet sind. Nach dem Anordnen eines Querverstärkungsmodulabschnitts 4a , 4b, ...auf dem Längsverstärkungsmodul 3 werden die Querverstärkungsmodulabschnitte 4a , 4b mit dem Längsverstärkungsmodul 3 verbunden. Vorliegend erfolgt die Verbindung zwischen den Querverstärkungsmodulabschnitten 4a, 4b, ... und dem Längsverstärkungsmodul 3 indem das Längsverstärkungsmodul 3 und die auf diesem angeordneten Querverstärkungsmodulabschnitte 4a, 4b, ... gemeinsam einer Wärmeeinwirkung unterzogen werden, indem diese gemeinsam um eine beheizte Walze 11 geführt werden, wodurch die Faservlieslage 7 aufgrund der darin angeordneten Schmelzklebefasern mit den Querverstärkungsmodulabschnitten 4a, 4b,... verklebt wird.

Zu bemerken ist, sich die ersten Fäden 8 und die zweiten Fäden 9 jedes Querverstärkungsmoduls im rechten Winkel kreuzen und hierbei jeweils mit den Längsfäden 6 des Längsfadengeleges 5 einen Winkel von ca. 45° einschließen.

Die derart gebildete Grundstruktur 2 kann zur Fertigstellung des Filzbandes nachfolgend noch ein- oder beidseitig mit zumindest einer Faservlieslage versehen werden.

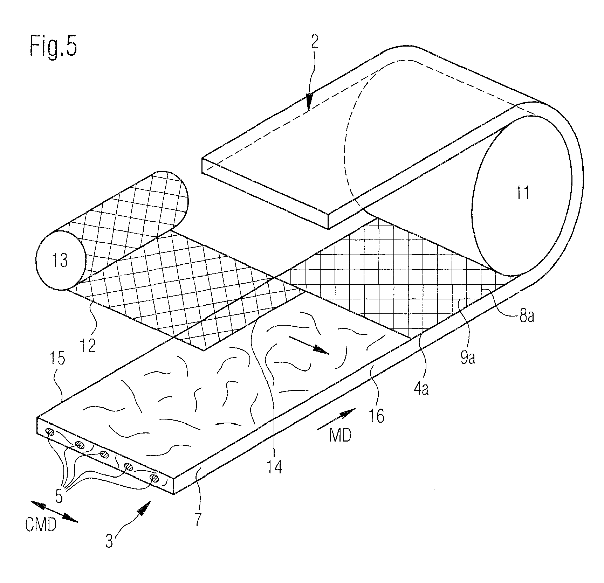

Die Figur 5 ein weiteres erfindungsgemäßes Verfahren zur Herstellung eines Filzbandes, insbesondere eines Filzbandes nach einem der Ansprüche 1-25, welches die folgenden Schritte umfasst

Es wird ein bahnförmiges Längsverstärkungsmodul 3 mit einer Länge und einer Breite bereitgestellt. Des Weiteren wird eine Querverstärkungsmodulausgangsbahn 12 mit einer Länge und einer Breite bereitgestellt, die auf eine Rolle 13 aufgewickelt ist und als Rollenware vorliegt. Die Querverstärkungsmodulausgangsbahn 12 wird dem Längsverstärkungsmodul 3 seitlich zugeführt indem das jeweils freie Ende 14 der Querverstärkungsmodulausgangsbahn 12 von einer Längskante 15 des Längsverstärkungsmoduls 3 zur anderen Längskante 16 des Längsverstärkungsmoduls 3 geführt wird (siehe Pfeil). Nach oder während dem Zuführen wird die Querverstärkungsmodulausgangsbahn 12 auf dem Längsverstärkungsmodul 3 abgelegt. Nach dem Ablegen wird der auf dem Längsträgermodul 3 abgelegte Abschnitt der Querverstärkungsmodulausgangsbahn 12 von der übrigen Querverstärkungsmodulausgangsbahn 12 unter Ausbildung eines Querverstärkungsmodulabschnitt 4a, 4b abgetrennt.

Alternativ kann auch schon während dem Ablegen der Querverstärkungsmodulausgangsbahn 12 auf dem Längsverstärkungsmodul 3 der auf dem Längsträgermodul 3 abzulegende Abschnitt der Querverstärkungsmodulausgangsbahn 12 von der übrigen Querverstärkungsmodulausgangsbahn 12 abgetrennt werden, um einen Querverstärkungsmodulabschnitt 4a, 4b auszubilden. Wie aus der Darstellung der Figur 5 ersichtlich ist, werden die Querverstärkungsmodulabschnitte 4a, 4b so geschnitten, dass deren Länge der Breite des Längsverstärkungsmoduls 3 entspricht.

In der Darstellung der Figur 5 wurde bereits ein Querverstärkungsmodulabschnitt 4a nach dem eben beschriebenen Verfahren auf dem Längsverstärkungsmodul 3 abgelegt während im Moment der Darstellung die Querverstärkungsmodulausgangsbahn 12 dem Längsverstärkungsmodul 3 seitlich zugeführt und auf diesem abgelegt wird und nach erfolgtem Ablegen (nicht dargestellt) so abgeschnitten wird, dass sich der Querverstärkungsmodulabschnitt 4b auf der Breite des Längsverstärkungsmoduls 3 erstreckt.

Nach dem Ablegen eines Querverstärkungsmodulabschnitts 4a auf dem Längsverstärkungsmodul 3 wurde das Längsverstärkungsmodul 3 in seiner Längsrichtung MD relativ zur Querverstärkungsmodulausgangsbahn 12 auf einer Strecke bewegt, die im Wesentlichen der Breite der Querverstärkungsmodulausgangsbahn 12 entspricht. Durch Wiederholen der vorher beschriebenen Schritte wird erreicht, dass die Querverstärkungsmodulabschnitte 4a, 4b, ... in Längsrichtung des Filzbandes hintereinander liegend angeordnet sind.

Vorliegend wird das Verfahren so durchgeführt, dass sich bei der fertig gestellten Grundstruktur 2 jeder der auf dem Längsverstärkungsmodul 3 abgelegten Querverstärkungsmodulabschnitte 4a, 4b auf der Breite des Längsverstärkungsmoduls erstreckt und dass sich die hintereinander liegend angeordneten Querverstärkungsmodulabschnitte 4a, 4b mit weiteren nicht dargestellten Querverstärkungsmodulabschnitten zu einer ununterbrochenen Lage ergänzen.

Wie bei dem in der Figur 4 beschriebenen Verfahren werden die abgelegten und zugeschnittenen Querverstärkungsmodulabschnitte 4a, 4b, ... mit dem Längsverstärkungsmodul 3 verbunden, indem das Längsverstärkungsmodul 3 und der oder die auf diesem angeordneten Querverstärkungsmodulabschnitte 4a, 4b, ... gemeinsam einer Wärmeeinwirkung unterzogen werden, indem diese um die beheizte Walze 11 geführt werden.

## Patentansprüche

1. Filzband, insbesondere Pressfilz für eine Papier-, Karton- oder Tissuemaschine, mit einer Grundstruktur gebildet aus
a) einem sich auf der Breite und der Länge des Filzbandes erstreckenden Längsverstärkungsmodul welches umfasst,
- ein Längsfadengelege auf der Breite und der Länge des Filzbandes, das gebildet ist aus zumindest einem sich im Wesentlichen in Längsrichtung des Bandes erstrecken Längsfaden und
- eine mit dem Längsfadengelege verbundene sich auf der Breite und der Länge des Filzbandes erstreckende Trägerlage
sowie
b) einem Querverstärkungsmodul gleicher Länge und Breite wie das Filzband, das auf dem Längsverstärkungsmodul angeordnet und mit diesem verbundenen ist, welches
- durch eine Mehrzahl von Querverstärkungsmodulabschnitten gebildet ist, die sich jeweils auf der Breite des Filzbandes und nur auf einem Teil der Länge des Filzbandes erstrecken und die in Längsrichtung des Filzbandes hintereinander liegend, sich zusammen zur Länge des Filzbandes ergängend angeordnet sind,
**dadurch gekennzeichnet,**
**dass** jeder Querverstärkungsmodulabschnitt eine Schar von ersten Fäden und eine Schar von zweiten Fäden umfasst, wobei sich die ersten und die zweiten Fäden an Fadenkreuzungsstellen kreuzen und gemeinsam ein netzartiges textiles Flächengebilde ausbilden.

2. Filzband nach Anspruch 1,
**dadurch gekennzeichnet,**
**dass** die Trägerlage allein oder in Kombination gebildet ist durch: eine Faservlieslage, eine Folienlage.

3. Filzband nach Anspruch 2,
**dadurch gekennzeichnet,**
**dass** das Längsfadengelege in die Faservlieslage eingebettet ist.

4. Filzband nach Anspruch 2 oder 3,
**dadurch gekennzeichnet,**
**dass** die Faservlieslage Schmelzklebefasern umfasst.

5. Filzband nach einem der vorherigen Ansprüche,
**dadurch gekennzeichnet,**
**dass** das Querverstärkungsmodul auf der Trägerlage des Längsverstärkungsmoduls angeordnet und mit dieser verbunden ist.

6. Filzband nach einem der vorherigen Ansprüche 2 bis 5,
**dadurch gekennzeichnet,**
**dass** das Längsfadengelege mit der als Faservlieslage ausgebildeten Trägerlage vernadelt ist.

7. Filzband nach einem der vorherigen Ansprüche,
**dadurch gekennzeichnet,**
**dass** die Länge der Quermodulverstärkungsabschnitte durch quer zur Längsrichtung des Filzbandes verlaufende Querränder begrenzt wird, wobei sich in Längsrichtung hintereinander benachbart angeordnete Querverstärkungsmodulabschnitte im Bereich der Querränder bereichsweise überlappen.

8. Filzband nach einem der Ansprüche 1-6,
**dadurch gekennzeichnet,**
**dass** die Länge der Quermodulverstärkungsabschnitte durch sich quer zur Längsrichtung des Filzbandes verlaufenden Querränder begrenzt wird, wobei die Querränder von in Längsrichtung hintereinander benachbart angeordneten Querverstärkungsmodulabschnitten auf Stoß gelegt sind.

9. Filzband nach einem der vorherigen Ansprüche,
**dadurch gekennzeichnet,**
**dass** die ersten Fäden und die zweiten Fäden an den Fadenkreuzungspunkten miteinander verbunden sind.

10. Filzband nach Anspruch 9,
**dadurch gekennzeichnet,**
**dass** die ersten Fäden mit den zweiten Fäden durch zumindest einen Nähfaden an den Fadenkreuzungspunkten miteinander verbunden sind.

11. Filzband nach einem der vorherigen Ansprüche,
**dadurch gekennzeichnet,**
**dass** die ersten und / oder die zweiten Fäden als flache Fäden ausgebildet sind.

12. Filzband nach einem der vorherigen Ansprüche,
**dadurch gekennzeichnet,**
**dass** der Nähfaden dünner ist als die ersten und die zweiten Fäden.

13. Filzband nach einem der vorherigen Ansprüche,
**dadurch gekennzeichnet,**
**dass** die ersten Fäden im Wesentlichen gleich dick sind wie die zweiten Fäden.

14. Filzband nach einem der vorherigen Ansprüche,
**dadurch gekennzeichnet,**
**dass** auf der zur Papierseite und/oder auf der zur Maschinenseite weisende Seite der Grundstruktur des Filzbandes zumindest eine Faservlieslage angeordnet ist.

15. Verfahren zur Herstellung eines Filzbandes Filzband, insbesondere Pressfilz für eine Papiermaschine, umfassend die folgenden Schritte:
a) Bereitstellen eines sich auf der Breite und der Länge des Filzbandes erstreckenden Längsfadengeleges, das aus zumindest einem sich im Wesentlichen in Längsrichtung des Bandes erstreckenden Längsfaden gebildet ist,
b) Bereitstellen einer sich auf der Breite und der Länge des Filzbandes erstreckenden Trägerlage,
c) Verbinden des Längsfadengeleges mit der Trägerlage zur Ausbildung eines Längsverstärkungsmoduls,
d) Herstellen einer Mehrzahl von flächenförmigen Querverstärkungsmodulabschnitten, deren Erstreckung in einer Richtung zumindest der Breite des herzustellenden Filzbandes und in einer dazu senkrechten Richtung nur einem Teil der Länge des herzustellenden Filzbandes entspricht,
e) Wiederholtes Anordnen eines in Schritt d) hergestellten Querverstärkungsmodulabschnitts auf dem Längsverstärkungsmodul, insbesondere auf der Trägerlage des Längsverstärkungsmoduls, so dass sich die Querverstärkungsmodulabschnitte jeweils auf der Breite des Filzbandes und nur auf einem Teil der Länge des Filzbandes erstrecken und in Längsrichtung des Filzbandes hintereinander liegend, einander zur Länge des Filzbandes ergänzend angeordnet sind,
f) Verbinden der Querverstärkungsmodulabschnitte mit dem Längsverstärkungsmodul,
**dadurch gekennzeichnet,**
**dass** jeder Querverstärkungsmodulabschnitt eine Schar von zueinander parallelen ersten Fadenabschnitten und eine Schar von zueinander parallelen zweiten Fadenabschnitten umfasst, welche die ersten Fäden kreuzen und mit diesen gemeinsam ein netzartiges textiles Flächengebilde ausbilden.

16. Verfahren nach Anspruch 15,
**dadurch gekennzeichnet,**
**dass** das Längsfadengelege **dadurch** hergestellt wird, indem ein oder mehrere sich im Wesentlichen in der vorgesehenen Längsrichtung des Filzbandes erstreckende Längsfäden in Richtung der vorgesehenen Breite des Filzbandes wendelförmig fortschreitend bis zur vorgesehenen Breite des Filzbandes gewickelt wird.

17. Verfahren nach einem der Ansprüche 15 -16,
**dadurch gekennzeichnet,**
**dass** die Trägerlage **dadurch** hergestellt wird, indem eine sich nur auf einem Teil der vorgesehenen Breite des Filzbandes erstreckende Trägerbahn in Richtung der vorgesehenen Breite des Filzbandes wendelförmig fortschreitend bis zur vorgesehenen Breite des Filzbandes gewickelt wird.

18. Verfahren nach einem der Ansprüche 15-17,
**dadurch gekennzeichnet,**
**dass** Schritt f) durchgeführt wird, indem das Längsverstärkungsmodul und die auf diesem angeordneten Querverstärkungsmodulabschnitte gemeinsam einer Wärmeeinwirkung unterzogen werden.

19. Verfahren zur Herstellung eines Filzbandes, insbesondere eines Filzbandes nach einem der Ansprüche 1-14, umfassend die folgenden Schritte:
a) Bereitstellen eines bahnförmigen Längsverstärkungsmoduls mit einer Länge und einer Breite,
b) Bereitstellen eines Querverstärkungsmodulausgangsbahn mit einer Länge und einer Breite,
c) seitliches Zuführen der Querverstärkungsmodulausgangsbahn zum Längsverstärkungsmodul, und
d) flächiges Ablegen der zugeführten Querverstärkungsmodulausgangsbahn auf dem Längsverstärkungsmodul,
e) Trennen des auf dem Längsverstärkungsmodul abgelegten Abschnitts der Querverstärkungsmodulausgangsbahn von der übrigen Querverstärkungsmodulausgangsbahn zur Ausbildung eines Querverstärkungsmodulabschnitts,
f) Bewegen des Längsverstärkungsmoduls in seiner Längsrichtung relativ zur Querverstärkungsmodulausgangsbahn auf einer Strecke, die im Wesentlichen der Breite der Querverstärkungsmodulausgangsbahn entspricht,
g) Wiederholen der Schritte c) bis f) so dass die Querverstärkungsmodulabschnitte in Längsrichtung des Filzbandes hintereinander liegend angeordnet sind.

20. Verfahren nach einem der Ansprüche 19 oder 20,
**dadurch gekennzeichnet,**
**dass** die Querverstärkungsmodulausgangsbahn als Rollenware vorliegt und diese bei der seitlichen Zuführung von der Rolle abgewickelt wird.
